# FASCICULE DE BREVET EUROPEEN

(11) **EP 3 148 839 B1**
(45) Date de publication et mention de la délivrance du brevet: **04.08.2021**
(21) Numéro de dépôt: 15727702.1
(22) Date de dépôt: 13.05.2015
(51) Int. Cl.: B60N 2/68, B60N 2/879, B60N 2/90, H04R 5/02, H04R 1/28, B60R 11/02, H04R 1/02

(54) **DOSSIER DE SIÈGE**
RÜCKENLEHNE FÜR SITZ
SEAT BACK-REST

(30) Priorité: 26.05.2014 FR 1454742
(43) Date de publication de la demande: 05.04.2017
(73) Titulaire: PSA Automobiles SA, 78300 Poissy (FR)
(72) Inventeur: FU, Chuanlang, 75013 Paris (FR); SANCIER, Olivier, 78650 Beynes (FR); PEYLABOUD, Patrick, 78610 Le Perray En Yvelines (FR); DUTOT, Christophe, 94400 Vitry Sur Seine (FR); HAYAT, David, 78770 Auteuil (FR)
(86) Numéro de dépôt international: PCT/FR2015/051272
(87) Numéro de publication internationale: WO 2015/181464

(56) Documents cités:
- EP-A1- 0 917 988
- DE-A1-102008 045 920
- GB-A- 2 102 656
- JP-A- 2005 080 756
- US-A1- 2003 152 245
- US-A1- 2006 273 649
- US-A1- 2009 196 432

## Description

La présente invention concerne de manière générale un dossier de siège de véhicule.

Il est connu dans l'art antérieur des véhicules comprenant divers dispositifs sonores tels que des haut-parleurs, des caisses de résonnance, etc. Ces dispositifs sont la plupart du temps situés dans les portières ou le châssis du véhicule ce qui complexifie la réalisation de ces structures tout en fournissant une qualité sonore moyenne dans l'habitacle. Il a donc été entrepris des études cherchant à éliminer ces problèmes.

Le document JP S61131998 décrit un appui-tête d'un siège de véhicule dans lequel sont intégrés des haut-parleurs au niveau des surfaces latérales et comprenant une chambre agissant comme une caisse de résonnance en son intérieur. Un problème de ce dispositif est qu'il complexifie grandement la structure de l'appui-tête tout en augmentant sa masse et son volume.

Le document EP09179881 montre un dossier de siège de véhicule comprenant une armature comprenant en outre un module creux d'extension formant caisse de résonance, fixé sur une portion supérieure de l'armature le dossier aussi comprenant des tiges de fixation d'appui-tête agencées pour fixer l'armature et le module creux d'extension formant caisse de résonance ensemble.

Un but de la présente invention est de répondre aux inconvénients mentionnés ci-dessus et en particulier, tout d'abord, de fournir un siège de véhicule simple à réaliser.

Pour cela un premier aspect de l'invention concerne un dossier de siège de véhicule comprenant une armature, un module creux d'extension formant caisse de résonance fixé sur une portion supérieure de l'armature, le module creux d'extension formant caisse de résonance étant composé de deux pièces, et le dossier comprenant en outre des tiges de fixation d'appui-tête (4) agencées pour fixer l'armature (2) et le module creux d'extension (3) formant caisse de résonance ensemble. Ainsi, le dossier de siège dispose d'une caisse de résonnance rapportée qui améliore sa modularité et simplifie sa être fixées ensemble. De cette manière, la caisse de résonnance est fixée de manière simple au dossier.

De manière avantageuse, le dossier de siège comprend en outre des tiges de fixation d'appui-tête agencées pour fixer l'armature et le module d'extension formant caisse de résonance ensemble. De cette manière, la caisse de résonnance est fixée sans devoir ajouter des pièces supplémentaires.

Une réalisation particulièrement intéressante consiste en ce que le module creux d'extension formant caisse de résonance est composé de deux pièces. Ainsi, la modularité du dossier est améliorée.

Avantageusement, les portions de formes complémentaires consistent en une portion creuse et une excroissance. De cette manière, elles sont faciles à réaliser.

De manière avantageuse, l'armature possède la portion creuse qui est agencée pour accueillir l'excroissance du module creux d'extension formant caisse de résonance. De cette manière, le dossier est plus léger.

Avantageusement, la portion creuse et l'excroissance sont agencées pour pouvoir être toutes deux traversées par les tiges de fixation d'appui-tête de sorte que le module creux d'extension formant caisse de résonance est en contact avec l'armature et les tiges de fixation d'appui tête. Ainsi, la fixation est robuste et simple à réaliser.

De manière avantageuse, le module creux d'extension formant caisse de résonance comprend en outre des emplacements pour la mise en place de dispositifs sonores. Ainsi, le volume de ces dispositifs est gagné dans la structure du véhicule.

Un deuxième aspect de l'invention est un siège comprenant un dossier de siège selon le premier aspect de l'invention.

Un troisième aspect de l'invention est un véhicule comprenant un dossier de siège selon le deuxième aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en perspective d'un dossier de siège selon la présente invention.
- les figure 2A et 2B représentent une vue de face et de haut du module d'extension formant caisse de résonance selon la présente invention.

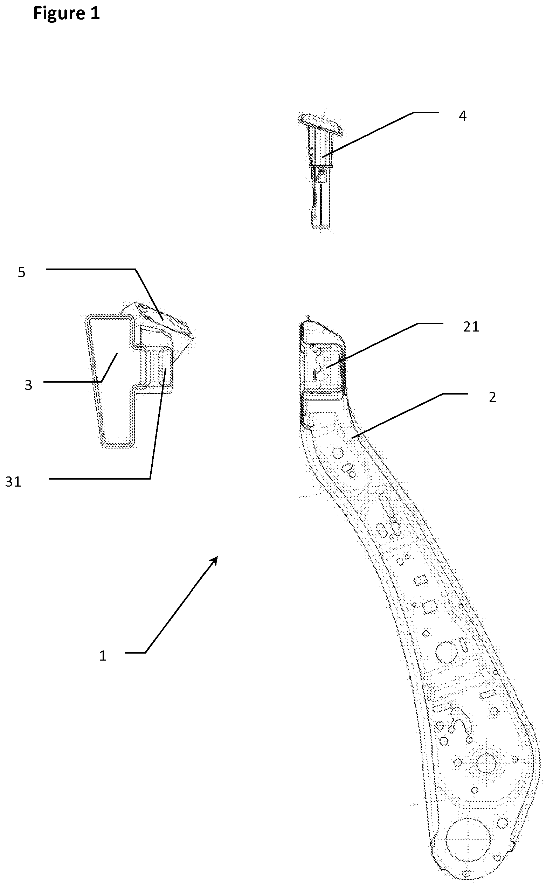

La figure 1 représente un dossier de siège 1 de véhicule comprenant une armature 2 et un module creux d'extension 3 formant caisse de résonance fixé sur une portion supérieure de l'armature 2. Le module creux d'extension comprend au moins un corps creux. Afin de se fixer l'une à l'autre, le module creux d'extension 3 et l'armature 2 comprennent chacun au moins une portion 21, 31 de forme complémentaire à l'autre et agencée pour épouser l'autre. De préférence, ces portions 21, 31 de formes complémentaires consistent en une portion creuse 21, tel que par exemple un renfoncement, et une excroissance 31. Encore plus préférablement, l'armature 2 possède la portion creuse 21 qui est agencée pour accueillir l'excroissance 31 du module creux d'extension 3 formant caisse de résonance.

Nous allons maintenant étudier comment l'armature 2 et le module creux d'extension 3 sont fixés ensemble. Comme représenté dans la figure 1, le dossier de siège 1 comprend en outre des tiges de fixation d'appui-tête 4 qui sont agencées pour fixer l'armature 2 et le module creux d'extension 3 ensemble. Plus précisément, l'excroissance 31 du module creux d'extension 3 est insérée dans la portion creuse 21 de l'armature 2. A la fois l'excroissance 31 et la portion creuse 21 sont traversées par un alésage 31', de préférence vertical de sorte à pouvoir être toutes deux traversées par les tiges de fixation d'appui-tête 4 de sorte que, une fois fixé, le module creux d'extension 3 soit en contact à la fois avec l'armature 2 et les tiges d'appui tête 4.

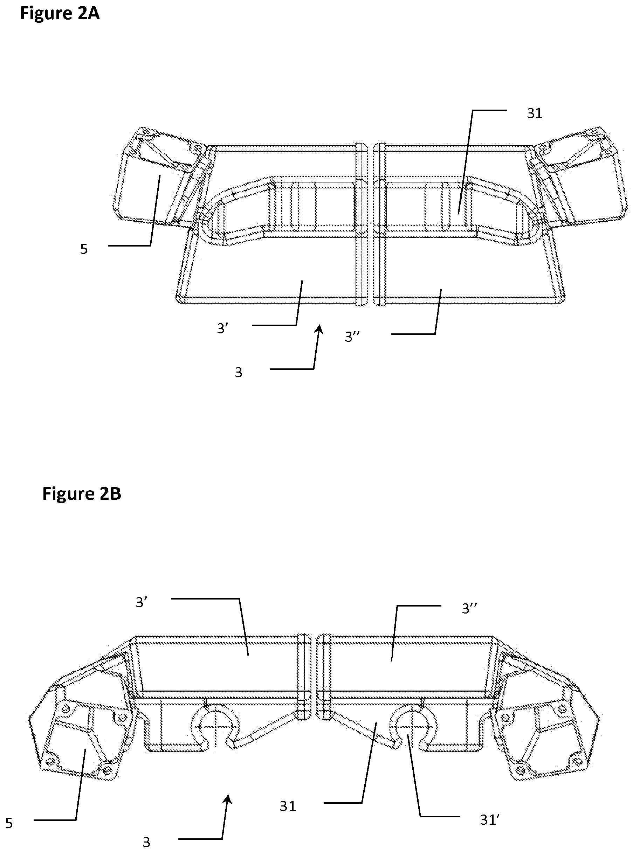

Les figures 2A et 2B montrent une vue plus en détail du module creux d'extension 3 formant caisse de résonance. Dans cette vue, le module creux d'extension est composé de deux pièces 3', 3", de préférence symétrique. D'un autre côté on peut imaginer un module creux d'extension 3 composé d'un seul élément. Sur ces figures sont également représentés des emplacements 5 pour la mise en place de dispositifs sonores.

Par ailleurs, sur la figure 2B sont représentés les alésages 31' à travers lesquels les tiges de fixation d'appui tête seront insérées lors de la fixation. Pour cela, lors de l'assemblage du module 3 et de l'armature 3, les alésages 31' du module 2 viennent en regard des alésages (non représentés) pratiqués dans la portion creuse 21 de l'armature 2.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence aux tailles des éléments, aux matériaux utilisés ainsi qu'aux divers types de dispositifs sonores montés sur le module creux.

## Revendications

1. Dossier de siège (1) de véhicule comprenant une armature (2), un module creux d'extension (3) formant caisse de résonance fixé sur une portion supérieure de l'armature, le module creux d'extension (3) formant caisse de résonance étant composé de deux pièces (3', 3"), et le dossier comprenant en outre des tiges de fixation d'appui-tête (4) agencées pour fixer l'armature (2) et le module creux d'extension (3) formant caisse de résonance ensemble.

2. Dossier de siège de véhicule selon la revendication 1, **caractérisé en ce que** le module creux d'extension (3) formant caisse de résonance et l'armature (2) ont au moins chacun une portion (21, 31), de forme complémentaire à l'autre, agencée pour épouser l'autre de sorte à pouvoir être fixées ensemble.

3. Dossier de siège de véhicule selon la revendication 2, **caractérisé en ce que** les portions (21, 31) de formes complémentaires consistent en une portion creuse (21) et une excroissance (31).

4. Dossier de siège de véhicule selon la revendication 3, **caractérisé en ce que** l'armature (2) possède la portion creuse (21) qui est agencée pour accueillir l'excroissance (31) du module creux d'extension (3) formant caisse de résonance.

5. Dossier de siège de véhicule selon la revendication 3 ou 4, **caractérisé en ce que** la portion creuse (21) et l'excroissance (31) sont agencées pour pouvoir être toutes deux traversées par les tiges de fixation d'appui-tête (4) de sorte que le module creux d'extension (3) formant caisse de résonance soit en contact avec l'armature (2) et les tiges d'appui tête.

6. Dossier de siège de véhicule selon l'une des revendications 1 à 5, **caractérisé en ce que** le module creux d'extension (3) formant caisse de résonance comprend en outre des emplacements (5) pour la mise en place de dispositifs sonores.

7. Siège de véhicule comportant un dossier de siège selon l'une des revendications 1 à 6.

8. Véhicule automobile comportant au moins un siège selon l'une des revendications 1 à 7.

## Patentansprüche

1. Fahrzeugsitzlehne (1) mit einem Anker (2), einem an einem oberen Teil des Ankers befestigten Resonanzboden-Erweiterungshohlmodul (3), wobei das Resonanzboden-Erweiterungshohlmodul (3) aus zwei Teilen (3', 3") besteht und die Rückenlehne ferner Kopfstützenbefestigungsstangen (4) aufweist, die zur Befestigung des Ankers (2) und des Erweiterungshohlmoduls angeordnet sind (3) als Resonanzboden zusammen.

2. Fahrzeugsitzrückenlehne nach Anspruch 1, **dadurch gekennzeichnet, dass** das Resonanzkasten-Verlängerungshohlmodul (3) und der Anker (2) mindestens je einen komplementär zueinander geformten Abschnitt (21, 31) aufweisen, der so angeordnet ist, dass er sich an den anderen anschließt, sodass er zusammengefügt werden kann.

3. Fahrzeugsitzrückenlehne nach Anspruch 2, **dadurch gekennzeichnet, dass** die komplementär geformten Abschnitte (21, 31) aus einem hohlen Abschnitt (21) und einem Vorsprung (31) bestehen.

4. Fahrzeugsitzrückenlehne nach Anspruch 3, **dadurch gekennzeichnet, dass** die Armatur (2) den hohlen Abschnitt (21) aufweist, der zur Aufnahme des Vorsprungs (31) des hohlförmigen Verlängerungsmoduls (3), das einen Resonanzkörper bildet, angeordnet ist.

5. Fahrzeugsitzrückenlehne nach Anspruch 3 oder 4, **dadurch gekennzeichnet, dass** der hohle Abschnitt (21) und der Vorsprung (31) derart angeordnet sind, dass beide von den Kopfstützenbefestigungsstangen (4) durchströmbar sind, dass das hohle Verlängerungsmodul (3), das den Resonanzkörper bildet, mit dem Anker (2) und den Kopfstützstangen in Kontakt steht.

6. Fahrzeugsitzrückenlehne nach einem der Ansprüche 1 bis 5, **dadurch gekennzeichnet, dass** das Resonanzboden-Erweiterungshohlmodul (3) ferner Stellen (5) zum Anbringen von Schallvorrichtungen aufweist.

7. Fahrzeugsitz mit einer Sitzlehne nach einem der Ansprüche 1 bis 6.

8. Kraftfahrzeug mit mindestens einem Sitz nach einem der Ansprüche 1 bis 7.

## Claims

1. Vehicle seat back (1) consisting of a frame (2), an extension hollow module (3) forming a resonance box attached to a top portion of the frame, the extension hollow module (3) forming a resonance box being composed of two parts (3', 3'), and the back containing head support rod (4) arranged to secure the frame (2) and the module expansion trough (3) forming resonance box together.

2. Vehicle seat back according to Claim 1, **characterized in that** the extension hollow module (3) forming resonance box and the reinforcement (2) each have at least one portion (21, 31), in complementary form to the other, arranged to marry the other so that it can be fixed together.

3. Vehicle seat folder according to Claim 2, characterized as portions (21, 31) of complementary shapes consist of a hollow portion (21) and an exgrowth portion (31).

4. Vehicle seat back according to claim 3, characterized as the reinforcement (2) has the hollow portion (21) which is arranged to accommodate the exgrowth (31) of the extension hollow module (3) forming resonance box.

5. Vehicle seat back according to claim 3 or 4, **characterized by** the hollow portion (21) and the exgrowth (31) being arranged so that both can be crossed by the head support rod (4) so that the extension hollow module (3) forming resonance box is in contact with the frame (2) and head support rod.

6. Vehicle seat folder according to one of claims 1 to 5, characterized as the extension hollow module (3) forming resonance box also includes slots (5) for the installation of sound devices.

7. Vehicle seat with seat back according to one of claims 1 to 6.

8. Motor vehicle with at least one seat according to one of the claims 1 to 7.
